# EUROPÄISCHE PATENTSCHRIFT

(11) **EP 1 391 685 B1**
(45) Veröffentlichungstag und Bekanntmachung des Hinweises auf die Patenterteilung: **10.08.2005**
(21) Anmeldenummer: 03004599.1
(22) Anmeldetag: 01.03.2003
(51) Int. Cl.: G01B 11/00, B60M 1/28

(54) **Messsystem für Kettenwerk**
Measuring device for catenary
Dispositif de mesure pour caténaire

(30) Priorität: 23.08.2002 DE 20213180 U
(43) Veröffentlichungstag der Anmeldung: 25.02.2004
(73) Patentinhaber: GBM Gleisbaumechanik Brandenburg/H. GmbH, 14474 Brandenburg (DE)
(72) Erfinder: Mielitz, Michael, 14774 Brandenburg/Kirchmöser (DE)
(74) Vertreter: Zinken-Sommer, Rainer

(56) Entgegenhaltungen:
- DE-A- 2 440 085
- DE-A- 2 547 081
- DE-U- 20 110 564
- DE-U- 29 502 102

## Beschreibung

Die Erfindung betrifft eine Messeinrichtung zur Bestimmung der Seitenlage einer Fahrleitung für elektrisch betriebene Schienenfahrzeuge durch punktuelles Erfassen der Position des Fahrdrahtes, mit optischen Schaltern, die im räumlichen Umfeld der Schleifleiste mindestens eines Stromabnehmers des Fahrzeuges angeordnet sind und bei Überdeckung durch den Fahrdraht ein Schaltsignal in das Fahrzeug senden.

Über Gleisanlagen von Eisenbahnen mit elektrischer Zugförderung befindet sich zum Zwecke der Stromversorgung eine Oberleitungsanlage. Die elektrisch betriebenen Triebfahrzeuge greifen dort über den Kontakt zwischen Stromabnehmer und Oberleitungsfahrdraht die von ihnen benötigte Energie ab. Der durch den mechanischen Kontakt und den Stromdurchfluß entstehende Verschleiß führt zu eine Minderung des Querschnittes des Fahrdrahtes und damit zu einer abnehmenden Zugfestigkeit des Fahrdrahtes. Um eine über die Breite der Schleifleiste der Stromabnehmer gleichmässige Verschleissrate zu erzielen, ist der Fahrdraht in einer Zickzacklinie über dem Gleis gespannt. Das Mass der seitlichen Auslenkung gegenüber der mittigen Lage ist wohldefiniert und darf bestimmte Maximalwerte nicht überschreiten, da andernfalls nicht nur ein Kontaktverlust zwischen Stromabnehmer und Fahrleitung eintritt sondern auch der Fahrdraht -bedingt durch die dynamischen Schwingungen von Fahrdraht und Stromabnehmer - unterhalb der seitlichen Auflaufhörner des Stromabnehmers einfädeln könnte. In einem solchen Falle würde das Schienenfahrzeug die Oberleitungsanlage aus ihre tragenden Aufhängung herausreissen und insbesondere bei höheren Geschwindigkeiten zu grossen Schäden bzw. zur kompletten Zerstörung der gesamten Oberleitungsanlage führen. Aus diesem Grund wird die Fahrdrahtseitenlage regelmässig kontrolliert und gegebenenfalls korrigiert.
Unter Fahrdrahtseitenlage bzw. Seitenlage des Fahrdrahtes ist im Folgenden die Abweichung des Fahrdrahtes in einer horizontalen Ebene aus einer definierten Mittellage lotrecht oberhalb der Gleisachse zu verstehen.
Für die Überprüfung der Fahrdrahtseitenlage gab es in der Vergangenheit unterschiedliche Ansätze. Im einfachsten Fall werden Messlineale am Schleifstück des Stromabnehmers befestigt, an denen ein Beobachter -ggf. unter Hinzuziehen eines Bildverarbeitungssystems mittels Fernbeobachtung, damit die Oberleitungsanlage nicht abgeschaltet werden muss - die relative Seitenauslenkung des Fahrdrahtes gegenüber der Mittenlage abliest. Bedingt durch Messfehler beim Ablesen geometrischer Informationen aus einem optischen Bild ist diese Methode jedoch sehr ungenau.
In DE 44 04 440 und DE 24 40 085 bzw. DE 25 47 081 sind Systeme beschrieben, die über trigongmetrische Berechnungen die Erfassung der Fahrdrahtseitenlage ermöglichen. Die erforderlichen Messgrössen werden durch Anstrahlen des Fahrdrahtes mittels zweier Lasersender oder über photoelektrische Sensoren ermittelt. Derartige Messysteme sind jedoch relativaufwendig und bergen vor allem die Gefahr, dass die Messergebnisse während der Messfahrten durch fahrzeuginduzierte Schwingungen verfälscht werden.
DE 197 40 485 offenbart eine mechanische Messvorrichtung mit einem rohrförmigen Ausleger, dessen unteres Ende in horizontal und vertikal schwenkbarer Weise am Träger-Messfahrzeug angebracht ist, während das obere Ende des Auslegers an einem Führungsblock angeordnet ist, der wiederum an der Fahrleitung in deren Längsrichtung gleitend anliegt. Mittels Wegaufnehmer sollen horizontaler und vertikaler Schwenkweg des Auslegers erfasst und daraus die Seitenlage des Fahrdrahtes ermittelt werden. Ein solches System ist jedoch ausserordentlich aufwendig und benötigt fahrzeugseitig einen grossen Einbauraum, der in den meisten Fällen nicht zur Verfügung steht.

In der Praxis bekannte einfache Systeme zur diskontinuierlichen Erfassung diskreter Punkte der Fahrleitung benutzen Schalter, die in die Schleifleiste des Stromabnehmers integriert sind und beim Überstreichen durch den Fahrdraht ausgelöst werden und ein Schaltsignal an ein nachgelagerte Signalverarbeitungseinheit abgeben. Schalter, die den Fahrdraht aufgrund induktiver Kopplung erkennen, haben den Nachteil gegenseitiger Beeinflussung oder müssen - wie in DE 196 16 896 offenbart - durch Verwendung unterschiedlicher Oszillator-Frequenzen bei den internen Schwingkreisen speziell ertüchtigt werden.
In DE 295 02 102 U wird eine Messvorrichtung beschrieben, die optische Schalter benutzt, wobei der Fahrdraht bei Tageslicht als Blende bzw. bei Fremdlicht als Reflektor benutzt wird, und somit die Potentialfreiheit der im Bereich der Schleifleiste des stromabnehmers befindlichen Bauteile der Messvorrichtung ermöglicht. Das hier offenbarte System weist den Nachteil auf, dass äussere, aus ungünstigen Umgebungsbedingungen resultierende Lichteinflüsse nicht ausreichend eliminiert werden und somit die Schaltsicherheit nicht gewährleistet ist.
DE 201 10 564 U schliesslich schlägt eine Zeile parallel angeordneter Reflexions-Lichtleiter vor, deren Empfangssignale durch eine oder mehrere bildverarbeitende Kameras gelesen und mittels Zuordnungsmatrix ausgewertet werden soll. Eine derartige Vorrichtung zielt auf die lückenlose Vermessung des Fahrdraht-Verlaufes ab. Im Hinblick auf die am Messort vorherrschenden extremen Witterungs- und Umgebungseinflüsse ist die Verarbeitung der anfallenden Bilddaten arbeitsintensiv und erfordert hohe Rechnerleistungen. Für reine Kontroll- bzw. Überprüfungsaufgaben ist eine solche Vorrichtung somit zu teuer.

Der Erfindung liegt die Aufgabe zugrunde, durch punktuelles Erfassen der Position des Fahrdrahtes dessen charakteristische Seitenlage-Werte zu erfassen und einer Auswertung zuzuführen. Neben der Beeinflussungsfreiheit zwischen Messeinrichtung und eingeschalteter Oberleitungsanlage soll ein Messeinsatz auch bei ungünstigen Witterungsverhältnissen und unter Eliminierung äusserer Lichteinflüsse möglich sein. Zur Vermeidung von Trassenkonflikten insbesondere auf stark befahrenen Strecken soll trotz der dynamischen Vorgänge im Kontaktbereich zwischen Stromabnehmer und Fahrdraht eine hohe Messgeschwindigkeit möglich sein. Der erforderliche konstruktive Aufwand soll zudem möglichst gering sein.

Diese Aufgabe wird in Verbindung mit dem Oberbegriff des Schutzanspruches 1 erfindungsgemäß dadurch gelöst, dass die optischen Schalter aus jeweils einem lichtaussendenen Lichttaster mit nachgeordneter Linse zur Erhöhung der Intensität des Lichts, einem lichtempfangenden Lichttaster mit vorgeschalteter Linse zur Verringerung der Streuwirkung des am Fahrdraht reflektierten Lichts und einem Impulsformer zur zeitlichen Verlängerung des vom empfangenden Lichttaster einlaufenden Impulses aufgebaut ist, am oder im Fahrzeug ein nachgeschaltetes Steuergerät zur Intensitätsauswertung der über die Lichttaster empfangenen Lichtimpulse angeordnet ist, das bei Vorliegen einer oberhalb eines vorgebbaren Schwellwertes liegenden Intensität auf Vorliegen eines gültigen Schaltsignales erkennt und ein elektrisches Signal an eine Bedien- und Anzeigeeinheit weiterleitet, die mit einem fahrzeugbasierten und / oder absoluten Wegmesssystem gekoppelt ist, sowie eine logische Verknüpfung der Informationsgrössen "gültiges Schaltsignal" und Posititonsangabe erfolgt.

Insbesondere ist es sinnvoll, die optischen Schalter an charakteristischen Positionen anzuordnen, deren Auslösen eine Seitenlage des Fahrdrahtes im konstruktiven Grenzbereich der Oberleitungsanlage signalisiert. Diese Positionen sind bevorzugt symmetrisch zur Mittelachse der Schleifleiste des Stromabnehmers angeordnet.

Eine vorteilhafte Ausgestaltung des Erfindungsgedankens sieht vor, dass lichtaussendender und lichtempfangender Lichtleiter einen spitzen Winkel von weniger als ca. 5° zueinander einnehmen. Dadurch wird erreicht, dass die Messvorrichtung vertikale Abstandsschwankungen, die bedingt durch die Eigendynamik von Fahrdraht bzw. Stromabnehmer auftreten können, unter Gewährleistung der Schaltsicherheit toleriert.

Die Anordnung der Messeinrichtung im Scheitelrohr des Stromabnehmers ist insbesondere dann vorteilhaft, wenn eine Verschmutzung der Sensoren durch den Abrieb des Fahrdrahtes reduziert werden soll.

Dies stellt eine neue Qualität dar, da es nun möglich ist, Aussagen zur charakteristischen Fahrdraht-Seitenlage mittels einer potentialfreien, konstruktiv einfach ausgeführten Vorrichtung auch bei hohen Messgeschwindigkeiten und ungünstigen Lichtverhältnissen zu erhalten.

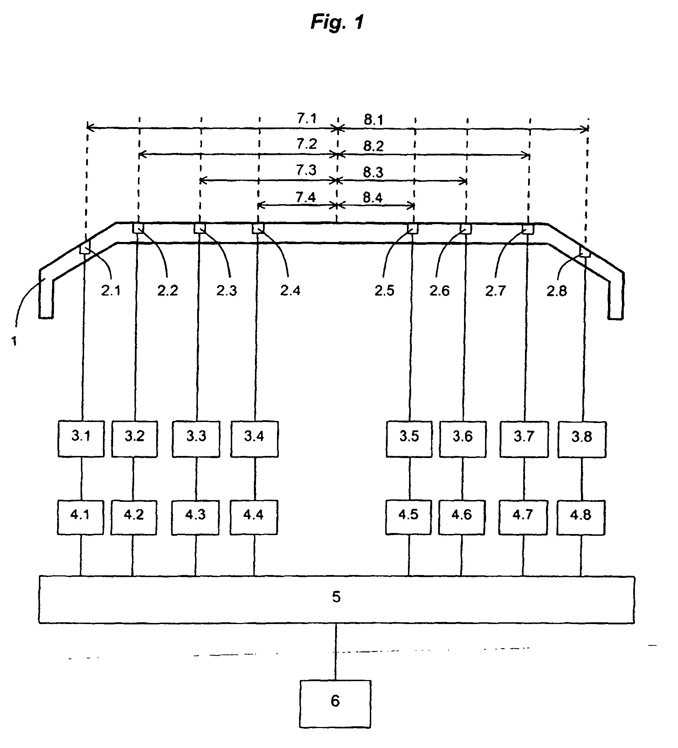

Der Erfindungsgedanke wird anhand eines in Figur 1 schematisch dargestellten Ausführungsbeispiels beschrieben.
Die Vorrichtung besteht aus acht Lichtleitersensoren (2.1 ... 2.8), die in vier Paaren jeweils achsensymmetrisch zur Mittelachse an der Schleifleiste (1) des Stromabnehmers angebracht sind. Sie weisen dabei Abstände von 330 mm, 430 mm, 550 mm und 750 mm zur Mittelachse auf. Die beiden innenliegenden Schaltpunkte (2.4 ... 2.6) dienen dabei der Überwachung des Zick-Zack-Verlaufes bei konventionellen Schienenstrecken (330 mm) bzw. Schnellfahrstrecken (430 mm). Die beiden aussenliegenden Schaltpunkte (2.1, 2.2, 2.7, 2.8) hingegen stellen die Überwachung auf eventuelle fehlerhaft ein- bzw. auslaufende Fahrdrähte sicher. Im Sollzustand dürfen beide Schaltpunkte nicht ausgelöst werden,
Ein Auslösen des Schaltpunktes 2.2 bzw. 2.7 wird noch toleriert, ein Auslösen der Schaltpunkte 2.1 bzw. 2.8 stellt jedoch einen gravierenden Mangel ausserhalb der Toleranzgrenze dar.
Die Lichtleitersensoren arbeiten als Einweglichtschranke und ermöglichen über ein an dem Messstromabnehmer installiertes Linsensystem des auf der Schleifleiste des Stromabnehmers vorbeigleitenden Fahrdrahtes. Mittels einer Linse am lichtaussenden Lichttaster wird die Lichtintensität verstärkt.
Eine Vorsatzlinse am lichtempfangenden Lichttaster sorgt für eine Reduzierung der Streuwirkung des am Fahrdraht reflektierten Lichtes. Somit wird insgesamt eine Verbesserung des optischen Signales erzielt.
Der Abstand zwischen Lichtleiter und Fahrdraht kann - bedingt durch die Einbaulage in der Schleifleiste - mit maximal 50 mm klein gehalten werden. Zum Ausgleich der Bewegungstoleranzen des Stromabnehmers wird der Winkel zwischen Sender und Empfänger möglichst steil bzw. klein (ca. 5°) gehalten. In Verbindung mit der Stärke des Fahrdrahtes hat dies die positive Auswirkung, das der Fahrdraht auch bei Abstandsänderungen zwischen Fahrdraht und Schleifleiste im Schaltbereich der Sensoren bleibt.
Am Signalausgang des Lichtleiters (3.1 ... 3.8) ist jeweils ein Impulsfomer (4.1 ... 4.8) angeschlossen, der das Ausgangssignal zeitlich verlängert. Dies ermöglicht den Einsatz einer handelsüblichen speicherprogrammierbaren Steuerung (SPS) (5) als Schalt- bzw. Steuergerät, die im vorliegenden Fall mit einer Zykluszeit von 20 msec arbeitet.
Über ein Anzeige- und Bediengerät (6) werden die zu überwachenden Sensoren durch den Bediener ausgewählt und eingestellt. Zur Reduzierung der Datenmenge und zur für den Bediener übersichtlicheren Durchführung des Messvorganges kann dabei selektiv vorgegangen werden, d.h. die einzelnen Sensoren können wahlfrei in beliebiger Kombination und Anzahl ausgewählt werden. Eine Ereignismeldung erfolgt nur dann, wenn der angesteuerte Sensor ausgelöst wird. Die Steuerung (5) liefert nunmehr bei jedem gültigen Schaltsignal (d.h. der Fahrdraht hat den ausgewählten Sensor überdeckt) eine Ereignismeldung (abhängig vom aktivierten Sensor) und koppelt diese Ereignismeldung mit einer Positionsangabe. Diese Positionsangabe kann dabei relativ (z.B. mittels Achsgeber, deren Signale in Bezug zur Streckenkilometrierung gesetzt werden) oder absolut (z.B. auf Basis GPS-Koordinaten) erfolgen. Eine registrierte Ereignismeldung mit Positionsangabe (Beispiel: "Sensor 1 wurde bei km 20,5 überdeckt") wird auf dem Anzeige-und Bediengerät (6) zur Anzeige gebracht und muss durch den Bediener quittiert werden; erst danach wird eine zwischenzeitlich neu generierte Ereignismeldung zur Anzeige gebracht und überschreibt den bisherigen Wert. Wird der identische Sensor mehr als einmal in Folge ausgelöst (ohne dazwischenliegendes Auslösen anderer Sensoren), so wird auf der Bedienanzeige die Positionsangabe gemäss der letzten Auslösung aktualisiert, ohne dass eine zwischenzeitliche Quittierung des Bedieners nötig wäre.
Über einen Zwischenspeicher können somit auch bei hohen Fahrgeschwindigkeiten Fahrdraht-Positionen nahe der Gleismitte lückenlos registriert werden. Alternativ wäre es natürlich auch denkbar, in automatischer Weise eine fortlaufende Tabelle mit Ereignis-Einträgen anzulegen und beispielsweise zeitlich und / oder räumlich vom Messvorgang entkoppelt auszulesen. Der Schwerpunkt der erfindungsgemässen Vorrichtung liegt jedoch bei der Erfassung unzulässig grosser Auslenkungen der Fahrdraht-Seitenlage.

Mittels der an sich bekannten Methode des Summensignales über alle Sensoren können schliesslich auch eventuelle Verschmutzungen detektiert werden.

### Bezugszeichenliste:

- 1: Schleifleiste des Stromabnehmers
- 2.1 ... 2.8: Lichtleitersensor
- 3.1 ... 3.8: Signalausgang des Lichtleitersensors
- 4.1 ... 4.8: Impulsformer
- 5: Speicherprogrammierbare Steuerung (SPS)
- 6: Anzeige- und Bediengerät
- 7.1 ... 7.4: Abstand der Sensoren 2.1 ... 2.4 von der Mittelachse der Schleifleiste
- 8.1 ... 8.4: Abstand der Sensoren 2.5 ... 2.8 von der Mittelachse der Schleifleiste

## Patentansprüche

1. Messeinrichtung zur Bestimmung der Seitenlage einer Fahrleitung für elektrisch betriebene Schienenfahrzeuge durch punktuelles Erfassen der Position des Fahrdrahtes, mit optischen Schaltern (2.1...2.8), die im räumlichen Umfeld der Schleifleiste mindestens eines Stromabnehmers des Fahrzeuges angeordnet sind und bei Überdeckung durch den Fahrdraht ein Schaltsignal in das Fahrzeug senden,
**dadurch gekennzeichnet,**
**dass** die optischen Schalter (2.1...2.8) aus jeweils einem lichtaussendenden Lichttaster mit nachgeordneter Optik zur Erhöhung der Lichtintensität, einem lichtempfangenden Lichttaster mit vorgeschalteter Optik zur Verringerung der Streuwirkung des am Fahrdraht reflektierten Lichts und einem Impulsformer (4.1...4.8) zur zeitlichen Verlängerung des vom empfangenden Lichttaster einlaufenden Impulses aufgebaut ist,
am oder im Fahrzeug ein nachgeschaltetes Steuergerät (5) zur Intensitätsauswertung der über die Lichttaster empfangenen Lichtimpulse angeordnet ist, das bei Vorliegen einer oberhalb eines vorgebbaren Schwellwertes liegenden Intensität auf Vorliegen eines gültigen Schaltsignales erkennt und ein elektrisches Signal an eine Bedien- und Anzeigeeinheit (6) weiterleitet, die mit einem fahrzeugbasierten und / oder absoluten Wegmesssystem gekoppelt ist,
sowie eine logische Verknüpfung der Informationsgrössen "gültiges Schaltsignal" und Positionsangabe erfolgt.

2. Messeinrichtung zur Bestimmung der Seitenlage einer Fahrleitung nach Anspruch 1, **dadurch gekennzeichnet, dass** die optischen Schalter an charakteristischen Positionen angeordnet sind, deren Auslösen eine Seitenlage des Fahrdrahtes im konstruktiven Grenzbereich der Oberleitungsanlage signalisiert.

3. Messeinrichtung zur Bestimmung der Seitenlage einer Fahrleitung nach mindestens einem der Ansprüche 1 oder 2, **dadurch gekennzeichnet, dass** lichtaussendender und lichtempfangender Lichtleiter einen spitzen Winkel von weniger als ca. 5° zueinander einnehmen.

4. Messeinrichtung zur Bestimmung der Seitenlage einer Fahrleitung nach mindestens einem der Ansprüche 1 bis 3, **dadurch gekennzeichnet, dass** die Messeinrichtung im Scheitelrohr des Stromabnehmers angeordnet ist.

## Claims

1. A measuring device for determining the lateral position of an overhead wire for electrically operated rail vehicles by selectively measuring the overhead wire position with the aid of optical switches (2.1,..., 2.8) that are arranged in the vicinity of the contact rail of at least one current collector of the vehicle and transmit a switching signal to the vehicle when they are covered by the overhead wire,
**characterized in**
**that** the optical switches (2.1,..., 2.8) are respectively composed of a light-emitting light scanner with a downstream optical system for increasing the luminous intensity, a light-receiving light scanner with an upstream optical system for reducing the scattering effect of the light reflected by the overhead wire, and a pulse shaper (4.1,..., 4.8) for extending the time of the pulse received from the receiving light scanner, in that
a downstream control device (5) for evaluating the intensity of the light pulses received via the light scanners is arranged on or in the vehicle, wherein said control device determines that a valid switching signal is present if the intensity lies above a predetermined threshold value and forwards an electric signal to an operating and display unit (6) that is coupled to a vehicle-based and/or absolute position measuring system, and in
**that** the information variables "valid switching signal" and positional data are logically linked.

2. The measuring device for determining the lateral position of an overhead wire according to Claim 1, **characterized in that** the optical switches are arranged in characteristic positions, in which their triggering signals a lateral position of the overhead wire in the constructive fringe range of the overhead wire system.

3. The measuring device for determining the lateral position of an overhead wire according to Claim 1 or 2, **characterized in that** the light-emitting light scanner and the light-receiving light scanner are arranged relative to one another at an acute angle of less than approximately 5°.

4. The measuring device for determining the lateral position of an overhead wire according to at least one of Claims 1-3, **characterized in that** the measuring device is arranged in the crossbar of the current collector.

## Revendications

1. Dispositif de mesure pour la détermination de la position latérale d'une caténaire pour véhicules ferroviaires fonctionnant à l'électricité par enregistrement ponctuel de la position du fil de contact à l'aide de commutateurs optiques (2.1 ... 2.8) qui sont disposés dans l'environnement spatial de la bande d'usure d'au moins un collecteur de courant du véhicule et, en cas de recouvrement par le fil de contact, envoient un signal de commutation dans le véhicule,
**caractérisé en ce que**
les commutateurs optiques (2.1 ... 2.8) sont composés respectivement d'un capteur lumineux émettant de la lumière avec une optique montée en aval pour augmenter l'intensité lumineuse, d'un capteur lumineux recevant de la lumière avec une optique montée en amont pour réduire l'effet de dispersion de la lumière reflétée sur le fil de contact et d'un conformateur d'impulsions (4.1 ... 4,8) pour la prolongation temporelle de l'impulsion arrivant du capteur lumineux récepteur,
sur ou dans le véhicule, est disposé un appareil de commande (5) monté en aval pour l'évaluation de l'intensité des impulsions lumineuses reçues par l'intermédiaire des capteurs lumineux et qui, en cas de présence d'une intensité se situant au dessus d'une valeur seuil prescriptible, détecte l'existence d'un signal de commutation valable et retransmet un signal électrique à une unité de manoeuvre et d'affichage (6) qui est couplée à un système de mesure de course basé sur le véhicule et/ou absolu,
et qu'un rattachement logique des variables d'information « signal de commutation valable » et l'indication de position est réalisé.

2. Dispositif de mesure pour la détermination de la position latérale selon la revendication 1, **caractérisé en ce que** les commutateurs optiques sont disposés sur des positions caractéristiques dont le déclenchement signalise une position latérale du fil de contact dans la zone limite au niveau construction de l'installation de caténaire.

3. Dispositif de mesure pour la détermination de la position latérale selon au moins une des revendications 1 ou 2, **caractérisé en ce que** les capteurs lumineux émettant de la lumière et recevant de la lumière forment entre eux un angle aigu de moins de 5° environ.

4. Dispositif de mesure pour la détermination de la position latérale selon au moins une des revendications 1 à 3, **caractérisé en ce que** le dispositif de mesure est disposé dans le tuyau sommital du collecteur de courant.
